# EUROPÄISCHE PATENTANMELDUNG

(11) **EP 0 655 184 A1**
(43) Veröffentlichungstag der Anmeldung: **31.05.1995**
(21) Anmeldenummer: 94113027.0
(22) Anmeldetag: 20.08.1994
(51) Int. Cl.: A01B 19/02, A01C 5/06

(54) **Landwirtschaftliche Maschine mit Zustreichern**

(30) Priorität: 26.11.1993 DE 9318118 U
(71) Anmelder: Rabewerk GmbH + Co., 49152 Bad Essen (DE)
(72) Erfinder: Gehrke, Rudolf, D-49152 Bad Essen (DE)
(74) Vertreter: Missling, Arne, Dipl.-Ing.

(57) **Zusammenfassung**

Die Erfindung betrifft eine landwirtschaftliche Maschine mit Zustreichern (1), die nebeneinander an einem Tragbalken (6) gehalten sind und nach hinten schräg zur Fahrtrichtung gestellte, im wesentlichen horizontal über dem Boden verlaufende Zustreichelemente (5) aufweisen, wobei jeder Zustreicher (1) mit zwei Zustreichelementen (5) versehen ist und sich die Wirkbereiche benachbarter Zustreicher (1) überlappen. Um einer Verstopfungsgefahr der Zustreichelemente (5) entgegenzuwirken und gleichzeitig möglichst viele Überlappungen der Wirkflächen der Zustreichelemente (5) zu erzielen, sind die beiden Zustreichelemente (5) zueinander parallel angeordnet.

## Beschreibung

Die Erfindung betrifft eine landwirtschaftliche Maschine mit Zustreichern, die nebeneinander an einem Tragbalken gehalten sind und nach hinten schräg zur Fahrtrichtung gestellte, im wesentlichen horizontal über dem Boden verlaufende Zustreichelemente aufweisen, wobei jeder Zustreicher mit zwei Zustreichelementen versehen ist und sich die Wirkbereiche benachbarter Zustreicher überlappen.

Aus dem Stand der Technik sind unterschiedliche Ausgestaltungsformen von landwirtschaftlichen Maschinen mit Zustreichern bekannt. Die Zustreicher dienen zum Einebnen von Erdwällen, welche z.B. beim Einlegen von Saatkörnern in durch Säscharen erzeugte Furchen entstehen, und somit zum Bedecken des Saatguts.

Der Stand der Technik zeigt Sämaschinen (DE-PS 27 26 340), bei denen hinter den Säscharen Zinken, auch Striegel oder Zustreicher genannt, mit zwei unterschiedlich langen - einem langen und einem kurzen - Zustreichelement an einer Befestigungsschiene angeordnet sind, deren Wirkbereiche sich überlappen.

Hierdurch können die Zustreicher gegenüber den Säscharen so eingestellt werden, daß sie nur mit einer Einstellung für verschiedene Reihenweiten der Säscharen einsetzbar sind. Bei mit Pflanzenresten bedeckten Bodenoberflächen kann es nun mit obigen Zustreichern vorkommen, daß diese Zustreicher im Bereich der Gabelstellen, wo jeweils die Zustreichelemente seitlich abgewinkelt sind und eng beieinander liegen, durch mitschleifende Pflanzenreste verstopft werden. Dies führt zu einer negativen Beeinflussung der Zustreicherwirkung.

Dieser Nachteil wurde im stand der Technik bereits erkannt, es sind deshalb Lösungen beschrieben, bei denen jeder Zustreicher nur ein Zustreichelement aufweist. Eine derartige Ausgestaltung zeigt beispielsweise die EP 01 71 705 A2. Eine ähnliche Variante ist in der EP 03 44 647 A1 beschrieben. Bei diesen Ausgestaltungsformen erweist es sich als nachteilig, daß entweder wegen der auf die Zustreicher einseitig wirkenden Kräfte eine große Anzahl von relativ zur Wirkbreite kurzen Zustreichern über die Breite der Bearbeitungsmaschine angeordnet werden müssen, oder daß stabilere und somit kostenintensivere Zustreicher eingesetzt werden müssen. Zudem sind bei erhöhter Zustreicherzahl auch mehr Bauteile für deren Befestigung notwendig.

Der Erfindung liegt die Aufgabe zugrunde, eine landwirtschaftliche Maschine der eingangs genannten Art zu schaffen, welche bei einfachem Aufbau und einfacher, betriebssicherer Anwendbarkeit unter einem guten Einebnen ein gleichmäßiges Bedecken des Saatgutes sicherstellt; wobei die Verstopfungsgefahr durch Pflanzenreste vermindert wird.

Erfindungsgemäß wird die Aufgabe dadurch gelöst, daß die beiden Zustreichelemente eines Zustreichers bzw. Striegels zueinander parallel angeordnet sind.

Die erfindungsgemäße landwirtschaftliche Maschine zeichnet sich durch eine Reihe erheblicher Vorteile aus. Erfindungsgemäß ist es möglich, eine Einebnung mit einem Zustreicher und zwei Zustreichelementen ohne Verstopfungsgefahr durchzuführen, da die "Gabelstelle" der beiden Zustreichelemente sich nicht auf Bodenniveau, sondern auf Höhe der Befestigung des Zustreichers am Tragrahmen befindet. Somit haben die auf dem Boden liegenden Pflanzenreste keinen Einfluß auf die Gabelstelle.

Ein weiterer, wesentlicher Vorteil der Erfindung ergibt sich weiterhin dadurch, daß aufgrund der Anordnung der Zustreicher und der einzelnen Zustreichelemente viele Überlappungsbereiche sowohl zwischen benachbarten Zustreicherwirkflächen als auch zwischen den Zustreichelement-Wirkflächen eines Zustreichers resultieren und folglich die Bearbeitungsmaschine für beliebige Saatreihenabstände und beliebig verstellbare Säschare geeignet ist.

In einer vorteilhaften Ausgestaltung der Erfindung sind die Zustreichelemente der beiden äußersten Zustreicher jeweils schräg nach innen, bezogen auf die Fahrtrichtung, ausgerichtet. Dies bewirkt, daß einerseits auch äußere, von den Säscharen erzeugte Erddämme eingeebnet werden und das Saatgut gleichmäßig mit Erde bedeckt wird, andererseits können keine neuen Erdwälle an beiden Rändern des Zustreicherrahmens angehäuft werden.

Vorzugsweise sind die Zustreichelemente benachbarter Zustreicher alternierend zur Seite ausgerichtet und optimieren einander überlappend den Einebnungseffekt.

In einer erfindungsgemäßen Ausgestaltung umfaßt jeder Zustreicher zwei Zinken, die jeweils aus einem Schenkel und dem Zustreichelement bestehen wobei die Schenkel benachbarter Zustreicher unterschiedlich lang sind. Dadurch wird sowohl eine Überlappung der einander benachbarten Zustreicher ermöglicht als auch im vorhinein ein gegenseitiges negatives Beeinflussen von benachbarten Zustreichern vermieden, selbst wenn kurzzeitig ein in Fahrtrichtung vor einem anderen Zustreicher angeordneter Zustreicher einmal ausweichen muß.

Zudem ist es günstig, wenn die Schenkel benachbarter Zustreicher in einem unterschiedlichen Winkel zur Horizontalen geneigt und benachbarte Zustreicher in Fahrtrichtung versetzt angeordnet sein, um eine gegenseitige Beeinflussung benachbarter Zustreicher zusätzlich auszuschließen.

Vorzugsweise sind die Zustreicher um eine quer zur Fahrtrichtung angeordnete Achse schwenkbar und federnd am Tragbalken gehalten, wobei die Vorspannung der Feder veränderbar und die Schwenkbarkeit der Zustreicher durch einen vorzugsweise verstellbaren Anschlag begrenzt ist. Hierdurch wird erreicht, daß die Zustreicher bzw. die Zustreichelemente bei Einwirken von großen Kräften entgegen der Fahrtrichtung einerseits nicht beschädigt oder verformt werden, da die Zustreicher in Wirkrichtung der Kraft ausweichen können und andererseits bei Beendigung der Fremdkrafteinwirkung wieder durch die Federkraft in ihre ursprüngliche Lage zurückbewegt werden. Die Lagerung des Zustreichers bewirkt zudem, daß er zum seitlichen Verlagern des Erdreichs eine hohe seitliche Steifigkeit besitzt.

Im folgenden wird ein Ausführungsbeispiel der erfindungsgemäßen landwirtschaftlichen Maschine mit Bezug auf die beigefügte Zeichnung beschrieben. Es zeigt:
- Fig. 1: eine Draufsicht auf nebeneinander angeordnete erfindungsgemäße Zustreicher;
- Fig. 2: eine Seitenansicht auf einen Zustreicher und die zugehörige Befestigungseinheit an einem Tragbalken gemäß der Erfindung sowie einen diesem benachbarten Zustreicher;
- Fig. 3: eine Vorderansicht des Zustreichers und der Befestigungseinheit von Fig. 2 in Richtung des Pfeils III.

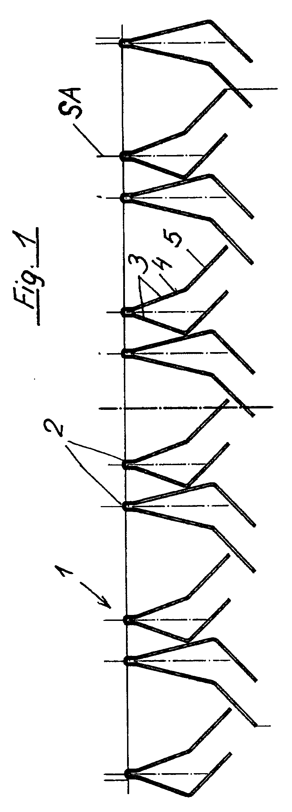

In Fig. 1 sind erfindungsgemäße Zustreicher dargestellt. Ein Zustreicher 1 umfaßt zwei mittels eines U-Formstücks 2 verbundene Zinken 3, die jeweils aus einem Schenkel 4 und einem Zustreichelement 5 bestehen. Die beiden Zustreichelemente 5 eines Zustreichers 1 sind parallel angeordnet und ihre Wirkbereiche in Fahrtrichtung überlappend. Zudem sind die Zustreichelemente 5 benachbarter Zustreicher 1 alternierend zur Seite gerichtet, bezüglich der Symmetrieachse SA des U-Formstücks 2 (Fig. 1), so daß sich auch die Wirkbereiche benachbarter Zustreicher 1 überdecken.

Die Schenkel 4 benachbarter Zustreicher 1 weisen unterschiedliche Längen auf. Dies bewirkt, daß eine gegenseitige Beeinflussung vermieden und ein freier Durchgang zwischen benachbarten Zinkenpaaren erreicht wird.

Ferner sind, wie aus Fig. 1 ersichtlich ist, die beiden äußersten, d.h. der linke und rechte Zustreicher 1 einer Zustreicherreihe mit ihren Zustreichelementen 5 nach innen gerichtet angeordnet. Dadurch werden im Einebnungsgebiet in den beiden äußeren Randzonen keine zusätzlichen Erdwälle angehäuft, sondern eine verhältnismäßig "homogene" Ebnungsfläche über die komplette Breite der Bearbeitungsmaschine erzielt.

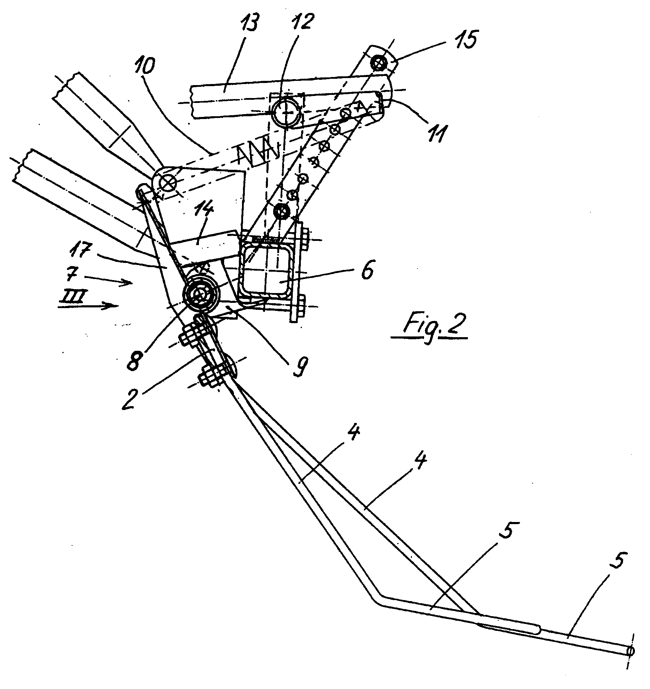

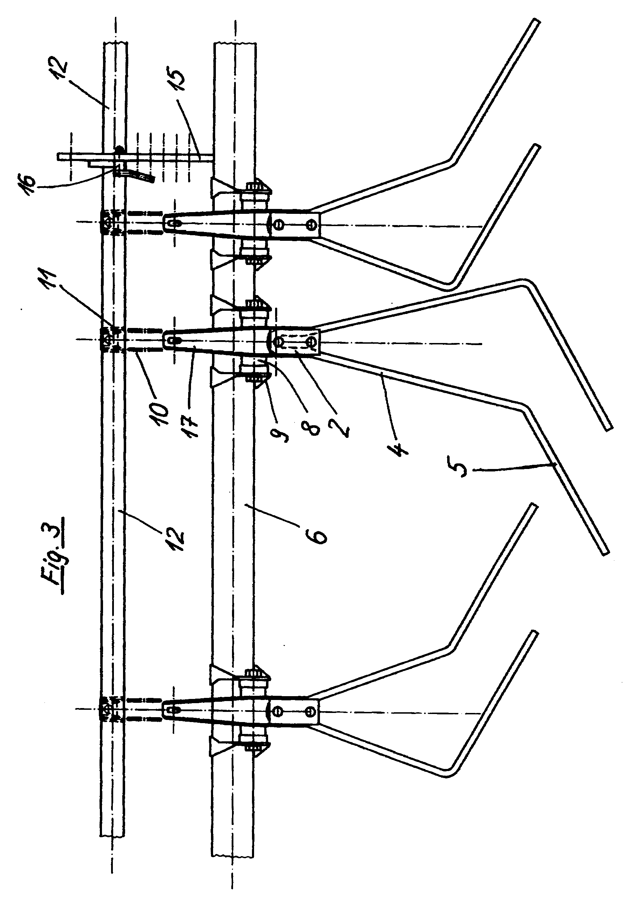

In Fig. 2 ist eine Seitenansicht auf einen Zustreicher 1 und die zugehörige Befestigungseinheit 7 des Tragbalkens 6 dargestellt. Dahinter wird ein benachbarter Zustreicher sichtbar. Der Zustreicher 1 ist mit seinem U-Formstück 2 um eine quer zur Fahrtrichtung ausgerichtete Achse 8 schwenkbar gelagert. Die Achse 8 ist in zwei Lagerkonsolen 9 gehalten, die mit dem Tragbalken 6 verschweißt sind. Zudem ist ein das Formstück 2 umgreifendes Verbindungsstück 17 mit einer Feder 10 verbunden, deren anderes Ende an einem Hebelarm 11 angreift (Fig. 3). Dieser Hebelarm 11 ist an einer Welle 12 befestigt, die mit einem Hebel 13 zum manuellen Spannen der Feder 10 zusammenwirkt. Die Stellung des Hebels 13 bzw. der Hebelarme 11 kann mit der mit einer Lochreihe versehenen Stütze 15 durch Abstecken mittels des Steckers 16 festgehalten werden. Somit kann mittels des Hebels 13 auf die Vorspannung der Feder 10 bzw. der Zustreicher 1 eingewirkt werden und entsprechender Anpreßdruck des Zustreichelementes 5 auf den Boden eingestellt werden. Gleichzeitig ist die Federaufhängung derart ausgestaltet, daß der wirksame Hebelarm bei einer Aufwärtsbewegung der Zinken 3 abnimmt. Dadurch bleibt der Anpreßdruck auch bei Bodenunebenheiten annähernd konstant.

Außerdem ist das Verbindungsstück 17 mit einem Anschlag 14 versehen, der die Schwenkbarkeit des Zustreichers 1 beschränkt, in dem er sich am Tragbalken 6 anlegen kann. Bei Betrieb der Bearbeitungsmaschine liegen die Zustreichelemente 5 der Zustreicher 1 horizontal auf dem Boden, wodurch der Anschlag 14 nicht am Tragbalken 1 zur Anlage kommt. Der Anschlag 14 dient zum Schutz der Zustreichelemente 5, wenn der Tragbalken 6 bei Beendigung des Sävorganges angehoben wird.

## Patentansprüche

1. Landwirtschaftliche Maschine mit :
Zustreichern (1), die nebeneinander an einem Tragbalken (6) gehalten sind und nach hinten schräg zur Fahrtrichtung gestellte, im wesentlichen horizontal über dem Boden verlaufende Zustreichelemente (5) aufweisen, wobei jeder Zustreicher (1) mit zwei Zustreichelementen (5) versehen ist und sich die Wirkbereiche benachbarter Zustreicher (1) überlappen, dadurch gekennzeichnet, daß die beiden Zustreichelemente (5) zueinander parallel angeordnet sind.

2. Landwirtschaftliche Maschine nach Anspruch 1, dadurch gekennzeichnet, daß sich die Wirkflächen von zwei Zustreichelementen (5) eines Zustreichers (1) überlappen.

3. Landwirtschaftliche Maschine nach Anspruch 1 oder 2, dadurch gekennzeichnet, daß die jeweiligen Zustreichelemente (5) der beiden äußeren Zustreicher (1) jeweils schräg nach innen, bezogen auf die Fahrtrichtung, ausgerichtet sind.

4. Landwirtschaftliche Maschine nach einem der Ansprüche 1 bis 3, dadurch gekennzeichnet, daß die jeweiligen Zustreichelemente (5) benachbarter Zustreicher (1) alternierend zur Seite ausgerichtet sind.

5. Landwirtschaftliche Maschine nach einem der Ansprüche 1 bis 4, dadurch gekennzeichnet, daß jeder Zustreicher (1) zwei Zinken (3) umfaßt, die jeweils aus einem Schenkel (4) und dem Zustreichelement (5) bestehen, und daß die Schenkel (4) benachbarter Zustreicher (1) unterschiedlich lang sind.

6. Landwirtschaftliche Maschine nach einem der Ansprüche 1 bis 5, dadurch gekennzeichnet, daß die Schenkel (4) benachbarter Zustreicher (1) in einem unterschiedlichen Winkel zur Horizontalen geneigt sind.

7. Landwirtschaftliche Maschine nach einem der Ansprüche 1 bis 6, dadurch gekennzeichnet, daß benachbarte Zustreicher (1) in Fahrtrichtung versetzt angeordnet sind.

8. Landwirtschaftliche Maschine nach einem der Ansprüche 1 bis 7, dadurch gekennzeichnet, daß die Zustreicher (1) federnd am Tragbalken (6) gehalten sind.

9. Landwirtschaftliche Maschine nach einem der Ansprüche 1 bis 8, dadurch gekennzeichnet, daß die Vorspannung der Feder (10) veränderbar ist.

10. Landwirtschaftliche Maschine nach einem der Ansprüche 1 bis 9, dadurch gekennzeichnet, daß die Zustreicher (1) um eine quer zur Fahrtrichtung angeordnete Achse (8) schwenkbar gelagert sind.

11. Landwirtschaftliche Maschine nach einem der Ansprüche 1 bis 10, dadurch gekennzeichnet, daß die Schwenkbarkeit der Zustreicher (1) mittels eines vorzugsweise verstellbaren Anschlags (14) begrenzt ist.
